# EUROPÄISCHE PATENTSCHRIFT

(11) **EP 2 089 129 B1**
(45) Veröffentlichungstag und Bekanntmachung des Hinweises auf die Patenterteilung: **04.01.2017**
(21) Anmeldenummer: 07822156.1
(22) Anmeldetag: 02.11.2007
(51) Int. Cl.: B01D 1/00

(54) **VERFAHREN ZUM VERDAMPFEN VON BESTANDTEILEN EINER FLÜSSIGKEIT MIT CHLOROSILANEN DURCH WECHSELSTROM**
METHOD FOR EVAPORATING COMPONENTS OF A LIQUID CONTAINING CHLOROSILANE WITH AC CURRENT
PROCÉDÉ DE VAPORISATION DE CONSTITUANTS D'UN LIQUIDE CONTENANT DES CHOLOROSILANES AVEC UN COURANT ALTERNATIF

(30) Priorität: 10.11.2006 DE 102006053157
(43) Veröffentlichungstag der Anmeldung: 19.08.2009
(73) Patentinhaber: Wacker Chemie AG, 81737 München (DE)
(72) Erfinder: ELLINGER, Norbert, 84389 Postmünster (DE); FUCHS, Paul, 5231 Schalchen (AT); KÄPPLER, Klaus, 84489 Burghausen (DE); STAIGER, Gerhard, 84375 Kirchdorf Am Inn (DE)
(74) Vertreter: Fritz, Helmut
(86) Internationale Anmeldenummer: PCT/EP2007/061825
(87) Internationale Veröffentlichungsnummer: WO 2008/055853

(56) Entgegenhaltungen:
- EP-A- 0 775 511
- US-A- 4 252 602
- US-A- 4 296 082

## Beschreibung

Die Erfindung betrifft ein Verfahren zum Verdampfen von Bestandteilen einer Flüssigkeit durch Durchleiten von Wechselstrom.

Im Bereich der Verfahrenstechnik ist seit langem bekannt, dass für eine effiziente Wärmeübertragung über heiße Oberflächen der Temperaturunterschied zwischen Heizfläche und zu erwärmender Flüssigkeit möglichst hoch sein muß. Bei der Verfolgung dieser Maxime ergeben sich jedoch Probleme beim Erhitzen von gashaltigen bzw. niedrigsiedende Anteile enthaltenden Flüssigkeiten. Übersteigt die Oberflächentemperatur eine kritische Temperaturdifferenz zum Siedepunkt der niedrigsiedenden Komponente so bildet sich auf der Heizfläche ein Dampffilm, der die Flüssigkeit von der Heizfläche thermisch isoliert und deshalb den Wärmefluß verschlechtert. Dieses Phänomen ist als "Leidenfrost'sches Phänomen" bekannt. Deshalb kann der notwendige Wärmeeintrag in die Flüssigkeit in solchen Fällen nur durch Erhöhung der Wärmeaustauschfläche erreicht werden. Andererseits ist aber oft aufgrund apparativer Gegebenheiten und Voraussetzungen eine derartige Erhöhung der Heizfläche nicht möglich bzw. sehr kostspielig.

Alkylchlorsilane werden auf dem Weg der sogenannten Direktsynthese aus Si und MeCl hergestellt. Dabei wird ein komplexes Gemisch verschiedenler Alkylchlorsilane mit unterschiedlichen Siedepunkten erhalten. Zielprodukt ist Dichlordimethylsilan mit einem Siedepunkt von 71°C (1013mbar).

Bei der destillativen Gewinnung der reinen Alkylchlorsilane aus dem durch die Direktsynthese erhältlichen Produktgemisch fallen Destillationsrückstände mit einem Siedunkt > 71°C an. Es handelt sich um komplexe Stoffgemische, die Verbindungen mit SiSi, SiOSi, SiCSi, SiCCSi und SiCCCSi-Strukturen enthalten.

Die Zusammensetzung dieser sogenannten Hochsieder ist beispielsweise in EP 0 635 510 genauer beschrieben. Rohstoffbedingt oder in Folge des gezielten Zusatzes katalytisch wirksamer Bestandteile findet man im Produktstrom der Direktsynthese neben Si weitere Verunreinigungen in Form von Cu, Zn, Sn, Al, Fe, Ca, Mn, Ti, Mg, Ni, Cr, B, P sowie C. Die Verunreinigungen liegen in suspendierter oder gelöster Form vor. Bei den gelösten Verunreinigungen handelt es sich meistens um Chloride.

Das Dokument US4296085 offenbart die Verdampfung einer Mischung von P₂O₅ durch Elektrizität.

Zum Aufheizen der Destillationsrückstände werden nach dem Stand der Technik z.B. Umlaufverdampfer, Dünnschichtverdampfer, Kurzwegverdampfer oder Rohrwärmetauscher eingesetzt. Nach Abtrennung der leichter siedenden Komponenten, bei der die vorstehenden Probleme bei der Wärmeübertragung bestehen, nimmt unter Hitzeeinfluss und in Gegenwart der suspendierten oder gelösten Verunreinigungen jedoch die thermische Stabilität der noch enthaltenen flüssigen Bestandteile ab. Es kommt zu Oligomerisierungen und Polymerisationsreaktionen. Die Viskositäten der Gemische steigen an. Es kommt zur Abscheidung von unerwünschten Ablagerungen in Rohrleitungen und vor allem auf den heißen Oberflächen der verwendeten Verdampfer. Der Stoff- und Energieaustausch wird zunehmend behindert. Aufgrund des dadurch verringerten Wärmeüberganges muss die Oberflächentemperatur der Verdampferflächen weiter erhöht werden, was wiederum zu einer beschleunigten Belegung dieser führt.

Die Apparate müssen oft gereinigt werden. Die Destillatausbeute sinkt. Die Anlagenverfügbarkeit ist unbefriedigend.

Nachteil der oben beschriebenen Verfahren nach Stand der Technik ist das Prinzip des Wärmeeintrags. Die Wärmeübertragung auf die flüssigen Silane geschieht über heiße Oberflächen wie z.B. Metalle oder Graphit die wiederum durch Wärmeträger ( Wasserdampf, Wärmeträgeröl) oder elektrischen Heizelementen beheizt werden. Bei dieser Art von Wärmeübertragung muss die Oberflächentemperatur des wärmeübertragenden Mediums höher sein als die zu erwärmende Flüssigkeit. Diese höheren Oberflächentemperaturen sind die Ursache der beschriebenen Probleme.

Gegenstand der Erfindung ist ein Verfahren zum Verdampfen von Bestandteilen einer Flüssigkeit, die ausgewählt wird aus
a) Destillationsrückständen aus der Direktsynthese von Methylchlorsilanen mit einem Siedepunkt > 71°C und
b) elektrisch leitfähigen Reaktionsgemischen von Chlorsilanen und wasserhaltigen oder wasserfreien Alkohol,
wobei die Flüssigkeit
Bestandteile A, welche ausgewählt werden aus bei 1013 mbar hochsiedenden und nichtsiedenden Bestandteilen und Bestandteile B aufweist, welche ausgewählt werden aus bei 20°C und 1013 mbar gasförmigen und mindestens 30 °K tiefer als die hochsiedenden Bestandteile A siedenden Bestandteilen,
wobei mindestens ein Bestandteil mindestens teilweise zu Ionen dissoziiert ist,
bei dem die Flüssigkeit durch Durchleiten von Wechselstrom erwärmt wird.

Beim Erhitzen von gashaltigen bzw. niedrigsiedende Anteile enthaltenden, elektrisch leitenden Flüssigkeiten wird nahezu die gesamte Energie in der Flüssigkeit zum Erwärmen genutzt, weil kein wärmeisolierender Dampffilm die Wärmeübertragung behindert. Die Oberflächen der Behälter und Rohrleitungen bleiben frei von Belägen.

Die Erwärmungs-, bzw. Verdampfungstemperatur ist sehr schnell und in engen Toleranzen regelbar, da keine Wärmeübertragung über heiße Oberflächen vorhanden ist.

Bei einer Unterbrechung des Flüssigkeitsstromes ist nicht mit einer Überhitzung der Flüssigkeit durch heiße Oberflächen zu rechnen und der Wärmeintrag kann abrupt durch die Abschaltung der Wechselstromzufuhr unterbrochen werden.

Das durch den Wechselstrom erzeugte elektrische Feld bringt Ladungsträger zum Schwingen wodurch sich die Flüssigkeit erwärmt. Eine vorher nicht leitende Flüssigkeit kann durch Zusatz von geeigneten Salzen elektrisch leitend gemacht werden, so dass das bei Anlagen einer Spannung die gewünsche Erwärmung eintritt.

Die hochsiedenden und nichtsiedenden Bestandteile A können teilweise oder vollständig zu Ionen dissoziiert, also elektrisch leitfähig sein, oder nicht leitend sein. Wenn die hochsiedenden und nichtsiedenden Bestandteile A nicht leitend sind, dann müssen die Bestandteile B elektrisch leitfähig sein. Beispiele für elektrisch leitfähige Bestandteile B sind gasförmige und niedrigsiedende Säuren, wie Salzsäure.

Vorzugsweise sieden die Bestandteile B mindestens 40 °K, insbesondere mindestens 50 °K tiefer als die hochsiedenden Bestandteile A.

Vorzugsweise beträgt die Wechselspannung mindestens 10, insbesondere mindestens 50 V und vorzugsweise höchstens 1000 V. Vorzugsweise beträgt die Frequenz der Wechselspannung mindestens 10, insbesondere mindestens 30 Hz und vorzugsweise höchstens 10000 Hz, insbesondere höchstens 10000 Hz. Wechselstrom schliesst auch Drehstrom mit ein.

Der spezifische elektrische Widerstand der Flüssigkeit beträgt vorzugsweise von 10¹⁰ m bis 10⁶ m, insbesondere 10⁹ m bis 10⁸ m.

Das Verfahren kann kontinuierlich oder diskontinuierlich durchgeführt werden.

Eine bevorzugte Vorrichtung für das Verfahren ist wie folgt aufgebaut: Die Flüssigkeit steht oder zirkuliert in einem rohrähnlichen Erhitzer aus zwei oder mehreren ineinander geschachtelten Rohren, die als Elektroden fungieren. An den Elektroden wird die elektrische Wechselspannung angelegt.

Der Zwischenraum der vorzugsweise rotationssymmetrisch angeordneten Rohre wird mit der Flüssigkeit gefüllt, die durch den Wechselstrom erwärmt wird. Die zwei oder mehreren innen liegenden Rohre werden durch eine elektrische Isolation getrennt und miteinander nach außen flüssigkeitsdicht verbunden.

Die Materialien der Elektroden müssen elektrisch leitfähig sein und können beispielsweise Metalle oder Graphit sein.

In Ausführungsform a werden elektrisch leitfähige Fraktionen der Alkylchlorsilandestillation, wie die vorstehend beschriebenen Destillationsrückstände aus der Direktsynthese von Methylchlorsilanen mit einem Siedunkt > 71°C durch Durchleiten von Wechselstrom erwärmt. Aufgrund der enthaltenen Verunreinigungen besitzen diese eine ausreichende elektrische Leitfähigeit. Es werden Werte für den spezifischen elektrischen Widerstand von 1.10⁹ m bis 10.10⁷ m ermittelt. Die zu Ionen dissoziierten Bestandteile bleiben bei einer Detillation im Sumpf des Verdampfers zurück oder werden über den Sumpfablauf kontinuierlich ausgeschleust und beeinflussen die Qualität der Destillate nicht.

In Ausführungsform b wird die elektrisch leitfähige Reaktionsmischung hergestellt aus Chlorsilanen, wie Tetrachlorsilan, Methyltrichlorsilan, Dimethyldichlorsilan, Trimethylchlorsilan oder deren Mischungen, und einem gegebenenfalls wasserhaltigen Alkohol, wie Ethanol oder Methanol mittels Durchleitung von Wechselstrom erwärmt. Die Umsetzung der Reaktion läßt sich nur dadurch vervollständigen, dass das bei der Reaktion entstehende HCl-Gas durch Temperaturerhöhung ausgetrieben wird. Da diese Mischung mit HCl gesättigt ist, bildet sich im Falle der Erwärmung mittels Wärmetauschers sofort eine thermisch isolierende Gasschicht an dessen Grenzfläche. Die Erwärmung durch Wechselstrom vermeidet dieses Problem und erlaubt eine kostengünstige, bezogen auf den Raumbedarf sehr effektive Heizung, da die Wärme direkt im Flüssigkeitsvolumen erzeugt wird und nicht über eine große Grenzfläche eines Wärmetauschers transportiert werden muß.

Im nachfolgenden Beispiel sind, falls nicht anders angegeben,
a) alle Mengen auf die Masse bezogen;
b) alle Drücke 0,10 MPa (abs.);
c) alle Temperaturen 20°C.

### Beispiel:

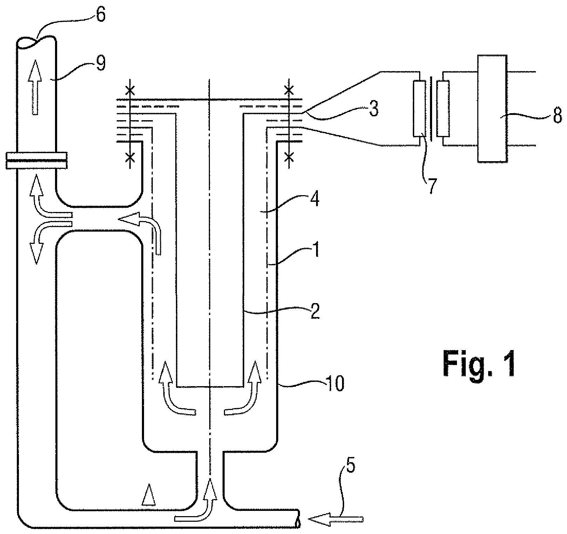

Das Beispiel wird mit Figur 1 erläutert, welche eine Heiz-, Verdampfungsvorrichtung als Schnittansicht zeigt.

Dabei tritt die Flüssigkeit (5) von unten in die Heiz-, Verdampfungsvorrichtung ein, erwärmt die Flüssigkeit im Zwischenraum (4) und tritt als erwärmte Flüssigkeit bzw. als Dampf (6) oben wieder aus. Zwischen den rotationssymmetrisch angeordneten Elektroden (1) und(2) fließt ein elektrischer Wechselstrom. Die Elektroden (1) und (2) sind durch eine elektrische Isolation (3) voneinander getrennt. Die Elektroden(1) und (2) sind in einem Glasbehälter (10) eingebaut. Der Dampf wird in eine Füllkörperkolonne (9) geleitet. Der Trenntransformator (7) und die Stromreglereinheit (8) speisen die Elektroden (1) und (2) mit regelbarer elektrischer Energie.

Technische Daten der Heiz-, Verdampfungsvorrichtung:
Elektrodenmaterial: Cr, Ni-Stahl
Länge der Elektrode(1): 200 mm
Durchmesser der Elektrode (1): 50 mm
Durchmesser der Elektrode (2): 30 mm
Elektrodenabstand (4) : 10 mm
Flüssigkeitsvolumen: 700 ml

Messergebnisse:
Beginn der Verdampfungsversuches:
   Temperatur der Flüssigkeit im Eintritt(5) 30°C
   Temperatur der Flüssigkeit im Behälter(4) 30°C
   Spannung: 240V, Frequenz: 50 Hz Strom : 0,3 A
   Spezifischer elektrischer Widerstand: 4,5.10⁹ Ωm
   Temperatur (Dampf) am Austritt (6) 30°C
   Temperatur der Elektroden (1) und (2): 30°C
   Während des kontinuierlichen Verdampfungsvorganges:
   Temperatur der Flüssigkeit im Eintritt(5) 30°C
   Spannung: 240V, Frequenz: 50 Hz Strom : 0,3 A
   Temperatur der Flüssigkeit im Behälter (4) 220°C
   Spezifischer elektrischer Widerstand: 4,5.10⁸ Ωm
   Temperatur (Dampf) am Austritt (6) 190°C
   Temperatur der Elektroden (1) und (2): 220°C

Die Oberflächen der Elektroden (1) und(2) zeigten nach dem Betrieb von 50 Std. weder eine Ablagerung noch eine Verkrustung, es war auch kein Abtrag des Elektrodenmaterials zu erkennen.

## Patentansprüche

1. Verfahren zum Verdampfen von Bestandteilen einer Flüssigkeit, die ausgewählt wird aus
a) Destillationsrückständen aus der Direktsynthese von Methylchlorsilanen mit einem Siedepunkt > 71°C und
b) elektrisch leitfähigen Reaktionsgemischen von Chlorsilanen und wasserhaltigen oder wasserfreien Alkohol, wobei die Flüssigkeit
Bestandteile A, welche ausgewählt werden aus bei 1013 mbar hochsiedenden und nichtsiedenden Bestandteilen und
Bestandteile B aufweist, welche ausgewählt werden aus bei 20°C und 1013 mbar gasförmigen und mindestens 30 °K tiefer als die hochsiedenden Bestandteile A siedenden Bestandteilen,
wobei mindestens ein Bestandteil mindestens teilweise zu Ionen dissoziiert ist,
bei dem die Flüssigkeit durch Durchleiten von Wechselstrom erwärmt wird.

2. Verfahren nach Anspruch 1, bei dem die Bestandteile B mindestens 40 °K tiefer als die hochsiedenden Bestandteile A sieden.

3. Verfahren nach Anspruch 1 oder 2, bei dem die Wechselspannung 10 bis 1000 V beträgt.

4. Verfahren nach Anspruch 1 bis 3, bei dem die Frequenz der Wechselspannung 10 bis 10000 Hz beträgt.

5. Verfahren nach Anspruch 1 bis 4, bei dem der spezifische elektrische Widerstand der Flüssigkeit 10¹⁰ Ωm bis 10⁶ Ωm beträgt.

## Claims

1. Process for evaporating constituents of a liquid which is selected from
a) distillation residues from the direct synthesis of methylchlorosilanes with a boiling point of > 71°C and
b) electrically conductive reaction mixtures of chlorosilanes and aqueous or anhydrous alchol, wherein the liquid comprises
constituents A which are selected from constituents which have high boiling points and do not boil at 1013 mbar and
constituents B which are selected from constituents which are gaseous at 20°C and 1013 mbar and boil at least 30 K lower than the high-boiling constituents A,
at least one constituent being at least partly dissociated to ions,
in which the liquid is heated by passing alternating current through it.

2. Process according to Claim 1, in which the constituents B boil at least 40 K lower than the high-boiling constituents A.

3. Process according to Claim 1 or 2, in which the alternating current is from 10 to 1000 V.

4. Process according to Claims 1 to 3, in which the frequency of the alternating current is 10 to 10 000 Hz.

5. Process according to Claims 1 to 4, in which the specific electrical resistivity of the liquid is from 10¹⁰Ωm to 10⁶Ωm.

## Revendications

1. Procédé d'évaporation de constituants d'un liquide choisi parmi
a) des résidus de distillation provenant de la synthèse directe de méthylchlorosilanes ayant un point d'ébullition supérieur à 71° C et
b) mélange réactionnel électriquement conducteur de chlorosilanes et d'alcool aqueux ou anhydre, le liquide présentant
des constituants A qui sont choisis à partir de constituants à haut point d'ébullition et ne bouillant pas à 1013 mbar et
des constituants B choisis à partir de constituants gazeux à 20°C et 1013 mbar et bouillant à une température inférieure d'au moins 30° K à celle des constituants A à haut point d'ébullition,
au moins un constituant étant au moins en partie dissocié en ions,
le liquide étant chauffé en faisant passer un courant alternatif.

2. Procédé selon la revendication 1, dans lequel les constituants B bouillent à une température inférieure d'au moins 40° K à celle des constituants A à haut point d'ébullition.

3. Procédé selon la revendication 1 ou 2, dans lequel la tension alternative est comprise entre 10 et 1000 V.

4. Procédé selon les revendications 1 à 3, dans lequel la fréquence de la tension alternative est comprise entre 10 et 10 000 Hz.

5. Procédé selon les revendications 1 à 4, dans lequel la résistance électrique spécifique du liquide est comprise entre 10¹⁰Ω^{m} à 10⁶Ωm.
